## Europäisches Patentamt

## European Patent Office

## Office européen des brevets

(19)

(11) Numéro de publication: **0 244 278**
**B1**

(12) ## FASCICULE DE BREVET EUROPEEN

(45) Date de publication du fascicule du brevet:
**27.12.90**

(51) Int. Cl.⁵: **G21C 19/36**

(21) Numéro de dépôt: **87400668.7**

(22) Date de dépôt: **25.03.87**

(54) **Procédé de mise en etui d'un faisceau de crayons d'un assemblage de combustible nucléaire et installation pour la mise en oeuvre de ce procédé.**

(30) Priorité: **01.04.86 FR 8604584**

(43) Date de publication de la demande:
**04.11.87 Bulletin 87/45**

(45) Mention de la délivrance du brevet:
**27.12.90 Bulletin 90/52**

(84) Etats contractants désignés:
**AT BE CH DE ES FR GB IT LI NL SE**

(56) Documents cités:
**EP-A- 0 066 695**
**EP-A- 0 140 025**
**EP-A- 0 164 510**
**EP-A- 0 191 359**

(73) Titulaire: **COMPAGNIE GENERALE DES MATIERES NUCLEAIRES (COGEMA), 2, rue Paul Dautier B.P. 4, F-78141 Velizy-Villacoublay(FR)**

(72) Inventeur: **Tsitsichvili, Jean, 126, Avenue de Verdun, F-92130 Issy Les Moulineaux(FR)**

(74) Mandataire: **Mongrédien, André et al, c/o BREVATOME 25, rue de Ponthieu, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un procédé de mise en étui d'un faisceau de crayons disposé selon un réseau à pas carré dans un assemblage de combustible nucléaire. L'invention se rapporte également à une installation pour la mise en oeuvre de ce procédé.

Dans les réacteurs nucléaires, notamment du type à eau pressurisée, la matière fissile est constituée par des pastilles frittées d'oxyde d'uranium $UO_2$. Ces pastilles sont placées en piles dans des gaines métalliques pour former des crayons de combustible. Les crayons sont eux-mêmes disposés en faisceaux selon un réseau à pas carré dans des assemblages de combustible nucléaire, qui sont ensuite juxtaposés pour former le coeur du réacteur.

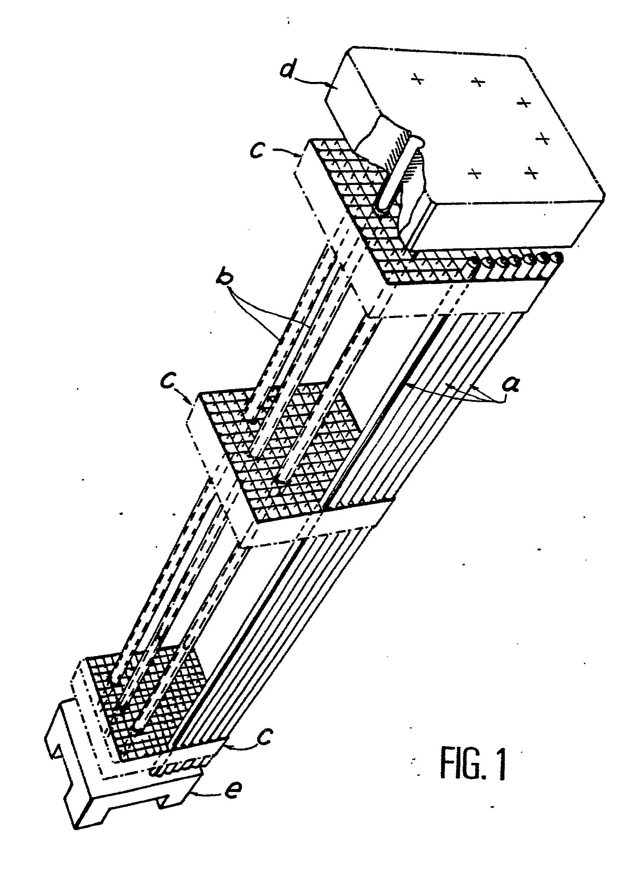

La figure 1 est une vue en perspective représentant schématiquement un assemblage de combustible nucléaire. Celui-ci comprend, en plus de faisceau de crayons a, un certain nombre de tubes guides b qui occupent la place de certains crayons a dans le réseau à pas carré. Pour clarifier la figure, seuls quelques crayons et quelques tubes guides ont été représentés. La plupart des tubes guides b servent à guider de façon coulissante les crayons absorbants des grappes de contrôle (non représentées).

Le positionnement relatif entre les crayons et les tubes est assuré par des grilles d'espacement c, généralement au nombre de huit et dont trois seulement sont représentées sur la figure 1. Ces grilles constituent l'ossature de l'assemblage.

L'assemblage comprend de plus deux pièces d'extrémité constituées par un embout supérieur d et par un embout inférieur e. Ces embouts servent respectivement à la manutention de l'assemblage et à la fixation de celui-ci dans le coeur du réacteur. Ils sont fixés aux extrémités des tubes guides b.

Lorsqu'un tel assemblage a été irradié dans le coeur d'un réacteur nucléaire, il doit être démantelé afin que le combustible soit retraité.

Une première étape du démantèlement des assemblages consiste à tronçonner les tubes guides b à un niveau inférieur à celui de l'extrémité supérieure des crayons a, afin de libérer l'accès à cette extrémité des crayons, après enlèvement de l'embout supérieur d, de la grille supérieure et des parties des tubes guides qui y sont attachées.

Au cours d'une deuxième étape, les crayons a sont saisis par leurs extrémités afin d'être extraits de la partie restante de l'ossature de l'assemblage.

Lorsque les crayons ont été extraits, le démantèlement proprement dit est terminé et les crayons sont généralement stockés en piscine afin de permettre une décroissance de leur activité. A cet effet, ils sont placés dans des étuis. L'invention concerne précisément un procédé et une installation permettant de mettre le faisceau de crayons en étui après son extraction.

Lorsque la décroissance de l'activité du combustible nucléaire contenu dans les crayons est jugée suffisante, ces derniers sont tronçonnés et le combustible qu'ils contiennent est dissous avant d'être retraité.

La mise en étui des crayons avant leur stockage a pour but de réduire autant que possible l'encombrement des crayons stockés tout en permettant une gestion aisée de ces crayons. A cet effet, toutes les informations concernant la vie de ces crayons (durée d'irradiation dans le réacteur, date de mise en étui, etc...) sont généralement consignées sur l'étui. L'opération de mise en étui des crayons doit donc permettre d'occuper au mieux le volume interne des étuis.

Dans l'état actuel de la technique, cette opération est réalisée en introduisant chacun des crayons verticalement dans un guide individuel dont le diamètre va en diminuant vers le bas, les extrémités inférieures des guides se rapprochant également vers le bas, au-dessus de l'étui à remplir disposé verticalement.

Les installations de ce type ont toutefois pour inconvénient qu'elles nécessitent de pousser individuellement sur chacun des crayons, ce qui est très difficile à réaliser compte tenu des déformations de certains crayons après irradiation. De plus, le passage de chacun des crayons dans un guide individuel présentant à son extrémité inférieure un diamètre à peine supérieur au diamètre nominal des crayons conduit à un risque de coincement de ces derniers résultant de leur gonflement sous irradiation.

Dans le document EP-A-0 06695, le rapprochement des crayons est obtenu grâce à un dispositif complexe à l'intérieur duquel les crayons sont poussés verticalement. Ce dispositif comprend trois parties assurant successivement le changement de forme du faisceau, le rapprochement des crayons contenus dans une même rangée, puis le rapprochement des rangées de crayons. Cependant, la première partie de ce dispositif présente des tubes de guidage individuels dans lesquels passent les crayons, de sorte que les inconvénients mentionnés précédemment subsistent.

La présente invention a précisément pour objet un procédé et une installation de mise en étui d'un faisceau de crayons supprimant tout risque de coincement de ces crayons tout en assurant un remplissage particulièrement efficace des étuis.

De façon plus précise, l'invention concerne un procédé de mise en étui d'un faisceau de crayons disposés en n rangées parallèles d'au moins r crayons, selon un réseau à pas carré dans un assemblage de combustible nucléaire, ce procédé étant caractérisé en ce qu'il consiste :

- à disposer le faisceau de crayons horizontalement selon ledit réseau dans une position d'attente au-dessus d'une cassette comprenant p logements séparés par des cloisons, p étant un entier au moins égal à n, de telle sorte que chaque rangée de crayons se trouve au-desus d'un logement de la cassette,
- à introduire les crayons dans les logements de la cassette,
- à disposer la cassette dans le prolongement horizontal d'un étui, en interposant entre la cassette et l'étui une pièce de transformation dont la largeur diminue progressivement de la cassette vers l'étui, d'une valeur égale à l'épaisseur cumulée des cloisons de la cassette ; et

- à transférer les crayons de la cassette dans l'étui au travers de la pièce de transformation, en poussant simultanément tous les crayons.

L'originalité essentielle de ce procédé réside dans l'utilisation d'une cassette intermédiaire. En introduisant les crayons du faisceau dans cette cassette, on rapproche les crayons selon une première direction du réseau à pas carré formé par le faisceau. Le transfert des crayons de la cassette intermédiaire dans l'étui assure le rapprochement des crayons selon la deuxième direction de ce réseau, sans qu'on ait recours à aucun moment à un guide individuel pour chacun des crayons. Au contraire, au cours de ce transfert, les crayons sont constamment au contact les uns des autres, de sorte qu'à la poussée exercée sur l'ensemble des crayons s'ajoute un entraînement par friction entre les crayons voisins.

Pour tenir compte du fait qu'en pratique le nombre de crayons dans certaines des rangées est supérieur à $r$, puisque les emplacements occupés précédemment par les tubes guides restent vides, on utilise une cassette dont chaque logement peut contenir au plus $s$ crayons, $s$ étant un entier au plus égal à $r$ et comprenant un nombre $p$ de logements supérieur à $n$ tel que le produit $p.s$ soit au moins égal au nombre de crayons du faisceau, et en ce que, afin d'introduire les crayons dans les logements, après avoir fait descendre $s$ crayons de chaque rangée dans chacun des $n$ logements situés endessous des $n$ rangées de crayons, on effectue un déplacment horizontal relatif perpendiculairement aux crayons entre la cassette et les crayons du faisceau non introduits dans les $n$ logements précités, dits crayons restants, afin d'amener les $(p-n)$ logements restants successivement en-dessous de chaque rangée de crayons et de faire descendre lesdits crayons restants dans ces $(p-n)$ logements.

Selon un mode de réalisation préféré de l'invention, on dispose le faisceau de crayons horizontalement dans la postion d'attente en maintenant les crayons selon le réseau à pas carré par au moins un jeu de peignes horizontaux et un jeu de peignes verticaux et on escamote le jeu de peignes horizontaux avant d'introduire les crayons dans les logements de la cassette.

De préférence, avant de disposer le faisceau de crayons horizontalement au-dessus de la cassette, on élimine une partie de l'assemblage pour dégager l'une des extrémités des crayons du faisceau, on dispose l'assemblage horizontalement dans le prolongement de ladite position d'attente et on extrait le faisceau de crayons de l'assemblage pour l'amener directement dans cette position d'attente, les peignes horizontaux et verticaux se mettant en place au fur et à mesure des déplacements du faisceau vers cette position.

Selon un autre aspect de l'invention, afin de faciliter l'introduction des crayons dans l'étui, on place au préalable à l'entrée de ce dernier un fond dans lequel viennent se loger les extrémités des crayons tournées vers l'étui, ce fond étant apte à coulisser dans l'étui avec les crayons lors de l'introduction de cas derniers.

Le procédé selon l'invention permet également de transférer les crayons dans des étuis pouvant avoir en section des formes diverses, par exemple triangulaires, hexagonales ou trapézoïdales.

A cet effet, avant d'introduire les crayons dans les logements de la cassette, on déplace vers le haut le fond d'au moins certains des logements, afin de réduire le nombre de crayons pouvant être reçus dans chaque logement dont le fond est déplacé. De plus, si la forme de l'étui l'exige, après avoir introduit les crayons dans les logements de la cassette, on déplace vers le bas le fond d'au moins certains des logements dont le fond a été déplacé vers le haut auparavant, afin que les crayons contenus dans ces logements soient au même niveau que la partie de l'étui dans laquelle ils doivent être introduits.

L'invention a également pour objet une installation de mise en étui d'un faisceau de crayons disposés en $n$ rangées parallèles d'au moins $r$ crayons, selon un réseau à pas carré dans un assemblage de combustible nucléaire, caractérisée en ce qu'elle comprend :

- des moyens pour maintenir le faisceau de crayons horizontalement selon ledit réseau dans une position d'attente au-dessus d'une cassette comprenant $p$ logements séparés par des cloisons, $p$ étant un entier au moins égal à $h$, de telle sorte que chaque rangée de crayons se trouve au-dessus d'un logement de la cassette,
- des moyens pour introduire les crayons dans les logements de la cassette,
- des moyens pour pousser simultanément tous les crayons contenus dans la cassette afin d'introduire ces crayons dans un étui disposé horizontalement dans le prolongement de la cassette, par l'intermédiaire d'une pièce de transformation interposée entre la cassette et l'étui, et dont la largeur diminue progressivement de la cassette vers l'étui, d'une valeur égale à l'épaisseur cumulée des cloisons de la cassette.

Dans un mode de réalisation préféré de l'invention, les moyens pour introduire les crayons dans les logements de la cassette comprennent au moins deux pièces horizontales de supportage s'étendant perpendiculairement par rapport aux crayons et sur lesquelles ces derniers peuvent reposer par gravité, et des moyens pour déplacer ces pièces verticalement entre une position haute dans laquelle lesdites pièces sont situées au-dessus de la cassette et une position basse dans laquelle lesdites pièces sont situées sous le fond des logements, dans des encoches verticales formées dans la cassette au droit des pièces de supportage.

On décrira maintenant, à titre d'exemple non limitatif, un mode de réalisation préféré de l'invention en se référant aux dessins annexés dans lesquels :

- la figure 1, déjà décrite, est une vue en perspective représentant de façon schématique et fragmentaire un assemblage de combustible nucléaire d'un réacteur nucléaire à eau sous pression,
- la figure 2 est une vue de côté illustrant de façon schématique la partie de l'installation selon l'invention permettant d'extraire le faisceau de crayons de l'assemblage et de l'amener en position d'attente au-dessus de la cassette,

- la figure 3 est une vue de dessus de la partie de l'installation représentée sur la figure 2,

- la figure 4 est une vue en bout, à plus grande échelle, représentant très schématiquement et partiellement en coupe la partie de l'installation illustrée par les figures 2 et 3,

- la figure 5 est une vue en perpective et partiellement en coupe de la partie de l'installation représentée sur les figures 2 à 4,

- la figure 6 est une vue de face représentant à plus grande échelle l'un des ensembles de peignes horizontaux et verticaux assurant le maintien du faisceau de crayons en position d'attente dans la partie de l'installation représentée sur les figures 2 à 5,

- la figure 7 est une vue de côté des peignes représentés sur la figure 6, en coupe selon la ligne VII-VII de la figure 6,

- la figure 8 est une vue en coupe transversale schématique de la partie de l'installation représentée sur les figures 2 à 5 illustrant plus précisément les positions occupées par les peignes lors du remplissage de la cassette,

- la figure 9 est une vue de côté représentant une extrémité de la cassette et les moyens pour contrôler le nombre de crayons contenus dans cette dernière,

- la figure 10 est une vue de côté schématique représentant la partie de l'installation permettant de transférer les crayons de la cassette dans l'étui,

- la figure 11 est une vue similaire à la figure 10 représentant la même partie de l'installation à la fin de l'introduction des crayons dans l'étui,

- la figure 12 est une vue de face et à plus grande échelle représentant de façon schématique le poussoir utilisé dans la partie de l'installation représentée sur les figures 10 et 11,

- la figure 13 est une vue de face de la pièce de transformation interposée entre la cassette et l'étui dans l'installation représentée sur les figures 10 et 11.

- la figure 14 est une vue comparable à la figure 8 illustrant une variante de réalisation dans laquelle le fond de certains des couloirs de la cassette est délimité par des lames mobiles verticalement,

- la figure 15 illustre le déplacement des lames mobiles de la cassette de la figure 14 permettant l'introduction des crayons dans un étui de section hexagonale, et

- la figure 16 est une vue de côté schématique illustrant la commande du déplacement des lames mobiles de la cassette de la figure 14.

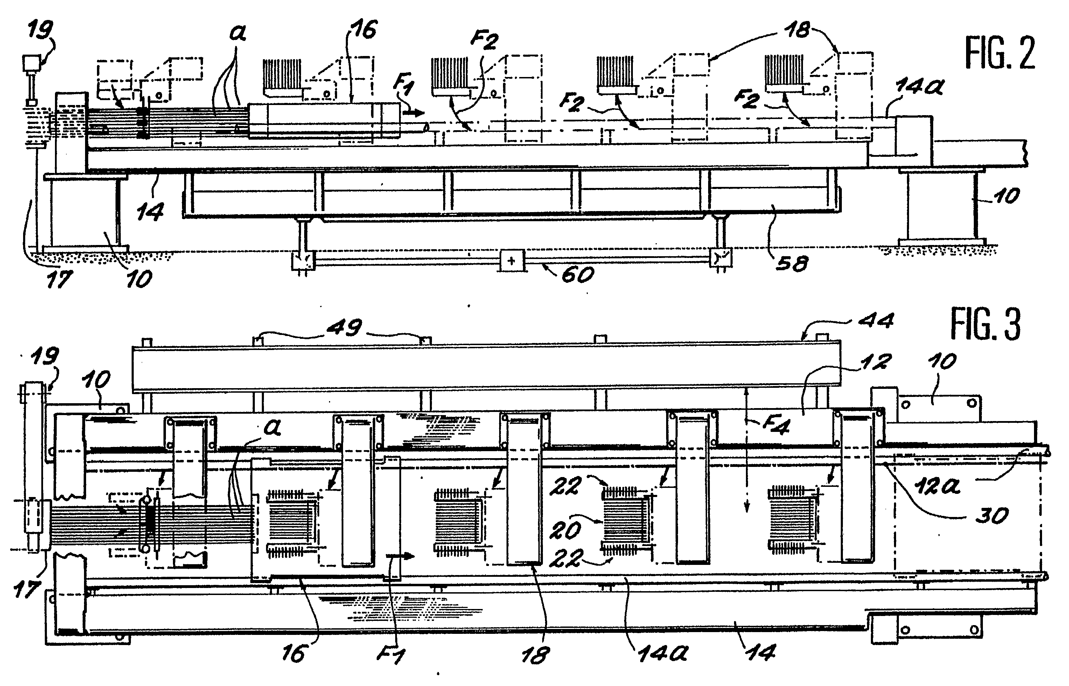

Sur les figures 2 à 4, on voit que l'installation selon l'invention comprend deux platines 10 supportant à leurs extrémités deux poutres horizontales et parallèles 12 et 14.

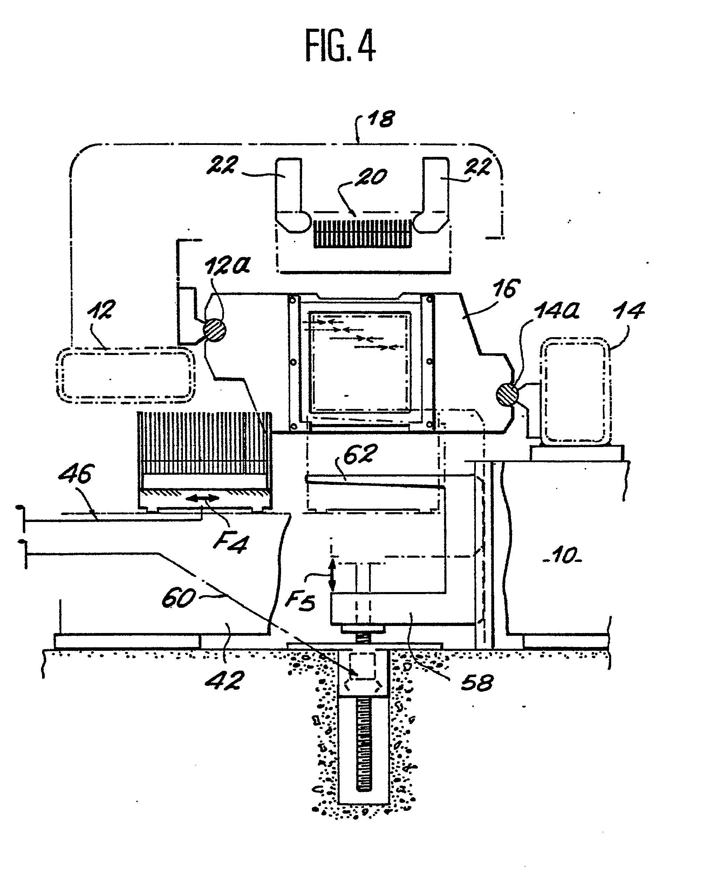

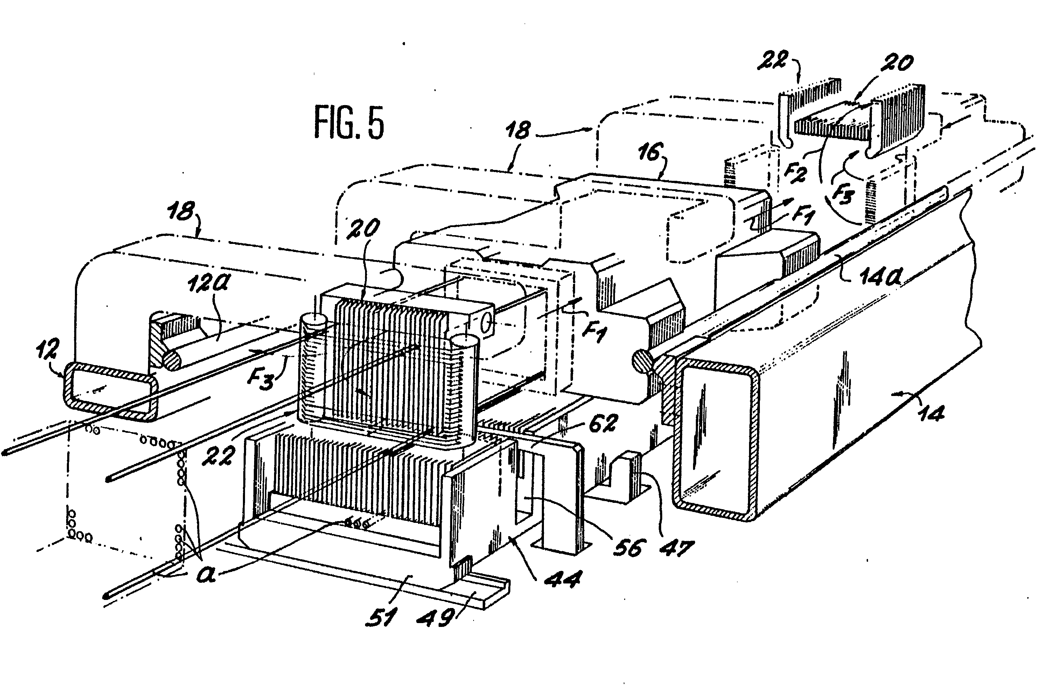

Comme l'illustrent plus précisément les figures 4 et 5, les poutres 12 et 14 portent des rails de guidage en vis-à-vis 12a et 14a, horizontaux et parallèles, sur lesquels peut coulisser un chariot 16. Ce chariot porte un dispositif de préhension permettant de saisir simultanément par leur extrémité les crayons $a$ d'un faisceau de crayons contenu dans un assemblage de combustible nucléaire tel que celui que est représenté sur la figure 1. Ce dispositif de préhension peut notamment être réalisé de la même manière décrite et revendiquée dans la demande de brevet européen EP-A 0 230 172 correspondant à la demande FR-A 2 591 021 déposée le 2 décembre 1985 par la Société COGEMA (Compagnie Générale des Matières Nucléaires).

Afin de permettre l'extraction du faisceau de crayons $a$ d'un assemblage de combustible nucléaire par le dispositif de préhension supporté par le chariot 16, un banc 17 est placé dans le prolongement des poutres horizontales 12 et 14. Ce banc est équipé de moyens de bridage 19 de l'ossature de l'assemblage, dont on a préalablement enlevé l'embout supérieur $d$ ainsi que la grille attenante $c$ (figure 1).

L'extrémité correspondante de l'assemblage étant placée sur le banc 17 à proximité de la partie gauche de l'installation représentée sur les figures 2 et 3, en amenant le chariot 16 à cet endroit, on saisit l'ensemble des crayons $a$ de l'assemblage par leur extrémité, à l'aide du dispositif de préhension porté par le chariot. L'ossature de l'assemblage étant bridée sur son banc, le déplacement du chariot vers la droite en considérant les figures 2 et 3 (flèche $F_1$) a pour effet d'extraire le faisceau de crayons $a$ et d'amener ce faisceau dans une position d'attente dans laquelle il est entièrement extrait de l'assemblage et se trouve en position horizontale, approximativement entre les platines 10 et les poutres 12 et 14.

Afin d'assurer le maintien des crayons du faisceau selon le réseau à pas carré dans lequel ils se trouvent à l'intérieur de l'assemblage, au fur et à mesure de leur extraction, des peignes horizontaux et verticaux sont prévus sur toute la longueur des poutres 12 et 14 et sont commandés pour venir se mettre en place automatiquement après le passage du chariot 16.

Dans le mode de réalisation représenté sur les figures 2 et 3, l'installation comprend deux jeux de peignes horizontaux 22 et un jeu de peignes verticaux 20. Chacun de ces jeux de peignes comprend dix peignes, un peigne de chaque jeu étant porté par une potence 18. Chacune des potences 18 est fixée sur la poutre 12 et comprend une partie horizontale en porte-à-faux située au-dessus du trajet suivi par le chariot 16.

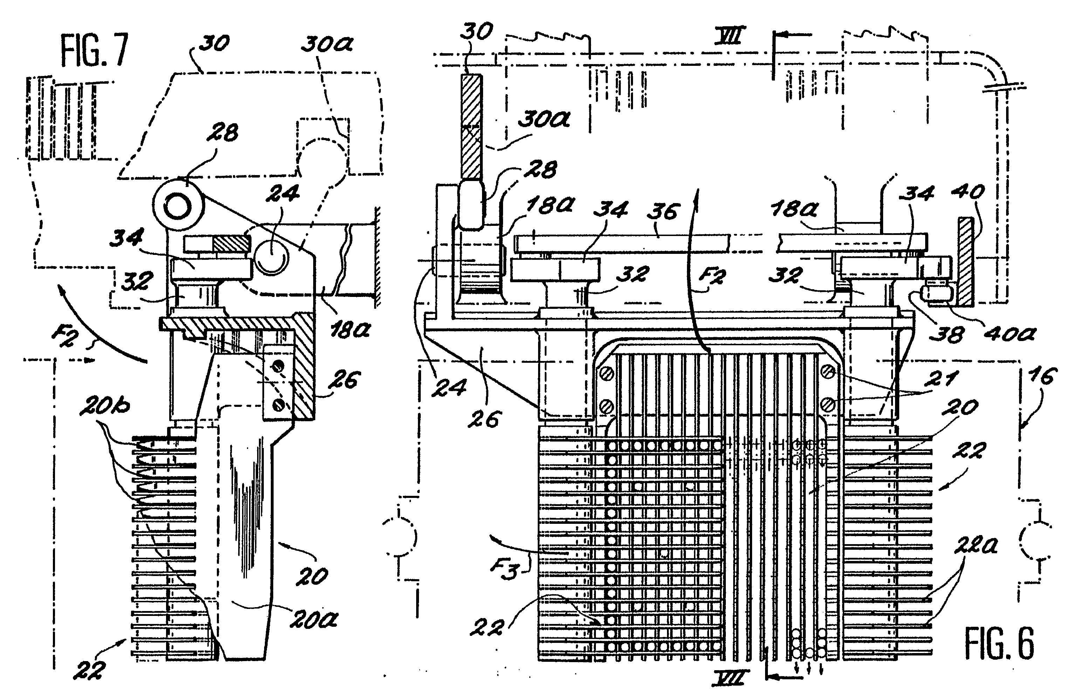

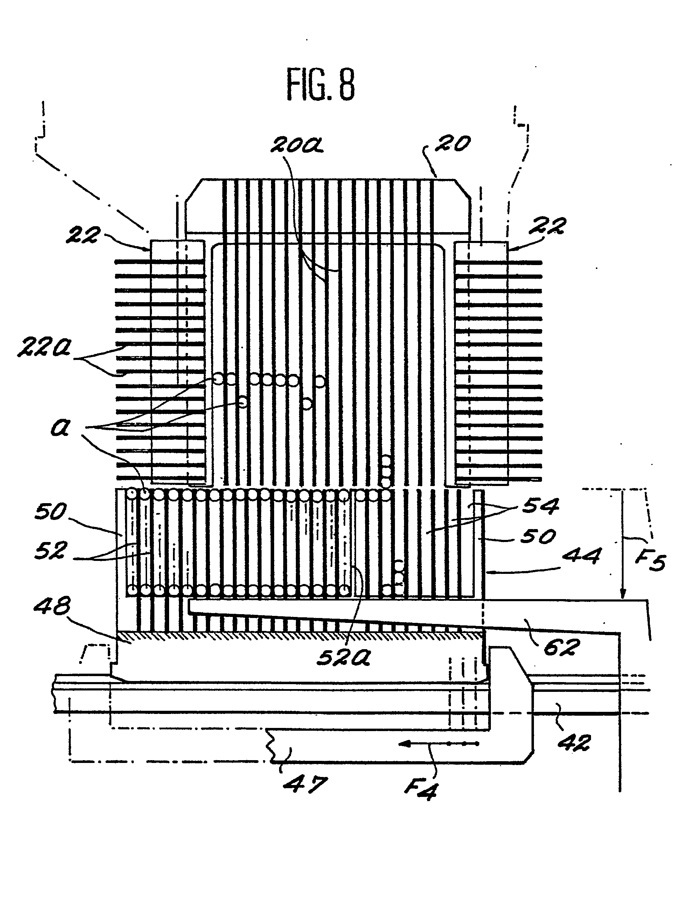

Comme l'illustrent plus précisément les figures 6 et 7, chacune des potences 18 supporte dans sa partie surplombant le faisceau de crayons un peigne vertical 20 et deux peignes horizontaux 22.

De façon plus précise, la partie horizontale de chacune des potences 18 comprend deux pattes 18a sur lesquelles un support 26 est reçu de façon pivotante par l'intermédiaire de deux axes alignés 24. L'axe de pivotement du support 26 est horizontal et orienté selon une direction transversale, orthogonale à la direction de déplacement du chariot 16 définie par les rails 12a et 14a et, par conséquent, à la direction des crayons $a$.

Comme on l'a représenté respectivement en traits pleins et en traits mixtes sur la figure 7, le support 26 peut occuper deux positions correspondant à la mise en place des peignes entre les crayons du faisceau et à l'escamotage de ces peignes. Ces deux positions du support 26 sont déterminées par la coopération d'un galet 28, d'axe horizontal, porté par le support 26 avec une barre à encoches horizontale 30 portée par les potences 18 et qui s'étend parallèlement aux rails 12a et 14a sur toute la longueur de la machine.

Lorsque le galet 28 est en contact avec le bord inférieur de la barre 30, comme on l'a représenté en traits pleins sur les figures 6 et 7, les dents 20a du peigne vertical 20, fixé au support 26 par exemple par des vis 21, font saillie verticalement vers le bas entre les crayons a du faisceau.

En revanche, lorsque le galet 28 est logé dans une encoche 30a formée sur le bord inférieur de la barre 30, le support 26 pivote dans le sens de la flèche F$_2$ de sorte que les dents 20a du peigne vertical 20 sont orientées horizontalement au-dessus du trajet suivi par le chariot 16, permettant ainsi le passage de celui-ci.

On comprendra aisément qu'en prévoyant sur toute la longueur de la barre 30, au niveau de chacune des potences 18, une encoche 30a de longueur appropriée, une translation de cette barre à encoches commandée simultanément avec le déplacement du chariot 16 a pour effet de mettre en place successivement chacun des jeux de peignes verticaux 20 après le passage du chariot 16. La commande du déplacement de la barre 30 peut être faite par tout moyen approprié (non représenté) assurant simultanément la commande du déplacement du chariot 16 le long des rails 12a et 14a.

Chacun des peignes horizontaux 22 est monté de façon pivotante sur le support 26 par un axe 32 orienté parallèlement aux dents 20a du peigne vertical 20 correspondant, les axes 32 étant disposés de part et d'autre de ce peigne vertical. Au-dessus du support 26, chacun des axes 32 porte une manivelle 34. Les deux manivelles 34 sont reliées entre elles par une bielle 36 dont les extrémités sont articulées sur chacune des manivelles par des axes parallèles aux axes 32.

En outre, l'une des manivelles 34 supporte un galet 38 d'axe parallèle aux axes 32. Ce galet 38 est en contact avec la face interne d'une deuxième barre à encoches 40 supportée par les potences 18 et qui s'étend parallèlement aux rails 12a et 14a sur toute la longueur de la machine, comme la barre 30.

Etant donné que les deux peignes horizontaux 22 ainsi que leur mécanisme de commande constitué par les manivelles 34, la bielle 36 et le galet 38 sont portés par le support 26 qui bascule autour de l'axe horizontal matérialisé par les axes 24, selon la position occupée par la barre 30, deux cas doivent être distingués dans l'analyse de la commande des peignes 22.

Lorsque le peigne vertical 20 occupe sa position escamotée représentée en traits mixtes sur les figures 6 et 7, les peignes 22 doivent également être escamotés comme on l'a représenté sur la moitié droite de la figure 6. Comme on l'a représenté en traits mixtes sur la figure 6, ce résultat est obtenu en pratique par le fait que le galet 38, dont l'axe est alors sensiblement horizontal, est en contact avec la partie supérieure de moindre épaisseur de la barre 40.

Lorsque le basculement du support 26 dans le sens inverse de la flèche F$_2$ intervient automatiquement lors de l'avance du chariot 16, la position de la barre 40 est alors telle que le galet 38 pénètre automatiquement dans une encoche 40a formée dans la partie inférieure plus épaisse de la barre 40. Cette dernière étant animée d'un mouvement de translation proportionnelle à l'avance du chariot 16, de même que la barre 30, lorsque la mise en place d'un peigne vertical 20 est terminée, le galet correspondant 38 sort de l'encoche 40a. Cela a pour effet de faire pivoter simultanément en sens inverse les axes 32 portant les peignes 22 (flèches F$_3$). Les dents 22a des peignes horizontaux 22 pénètrent ainsi entre les rangées horizontales de crayons a, comme on l'a représenté sur la moitié gauche de la figure 5.

Les dents 20a des peignes verticaux 20 ont une longueur telle qu'ils séparent complètement les rangées verticales de crayons a lorsque ces peignes sont en position de travail. Au contraire, la longueur des dents 22a de chacun des peignes 22 est telle que chacun de ces peignes sépare sur la moitié seulement de leur longueur les rangées horizontales de crayons a lorsque ces peignes sont en position de travail.

Comme l'illustre en particulier la figure 7, pour faciliter l'introduction des dents des peignes horizontaux 22 entre les crayons a, certaines au moins des dents 20a du peigne vertical 20 présentent elles-même des dents 20b sur leur bord avant (en considérant le sens de déplacement du chariot 16). Les dents 22a des peignes verticaux 22 pénètrent dans les fentes formées entre ces dents 20b.

Grâce au mécanisme qui vient d'être décrit en se référant en particulier aux figures 6 et 7, les crayons a du faisceau sont supportés et maintenus selon le réseau à pas carré qu'ils occupaient préalablement dans l'assemblage de combustible nucléaire par les trois jeux de peignes 20 et 22. Lorsque les crayons a sont extraits en totalité de l'assemblage (position d'attente), le dispositif de préhension porté par le chariot 16 est relâché, de sorte que le supportage des crayons n'est plus réalisé que par les peignes.

Comme l'illustrent plus précisément les figures 3 et 4, l'installation selon l'invention comprend de plus un banc 42 s'étendant entre les platines 10 et supportant une cassette 44.

A ce banc 42 est associé un mécanisme représenté schématiquement en 46 sur la figure 4 et permettant de déplacer transversalement la cassette 44 selon une direction horizontale orthogonale à la direction des rails 12a et 14a. De façon plus précise, ce mécanisme 46 permet de déplacer la cassette entre une position de chargement dans laquelle cette dernière est située verticalement en-dessous du faisceau de crayons en position d'attente et une position de déchargement dans laquelle la cassette est décalée latéralement par rapport à la partie de l'installation représentée sur les figures 2 à 4 (flèche F$_4$ sur la figure 3).

Come le montre plus précisément la figure 5, ce mécanisme 46 agit sur des berceaux mobiles 47 sur lesquels repose la cassette 44. Le guidage de la cassette est assuré par des rails 49 montés sur le banc 42 et dans lesquels sont reçus des patins 51 formés sur la cassette.

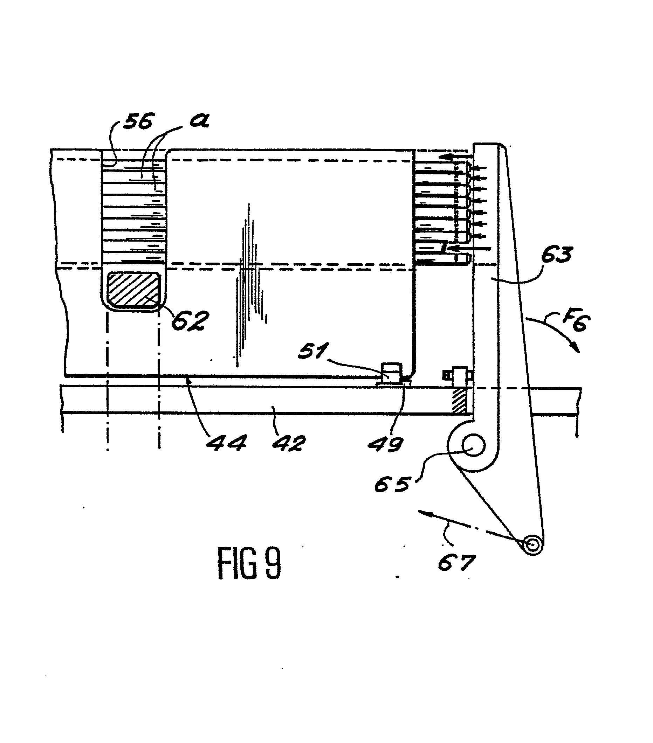

La cassette 44 s'étend sur une longueur légèrement inférieure à celle des crayons a. Comme l'illustrent plus précisément les figures 8 et 9, elle comprend un fond horizontal 48, deux cloisons latérales verticales 50 et un certain nombre de cloisons intermédiaires verticales 52 définissant entre elles des logements 54. La largeur de chacun des logements 54 ainsi formés est légèrement supérieure au diamètre d'un crayon a, alors que la hauteur de ces logements est conçue pour recevoir un nombre déterminé de crayons empilés, ce nombre étant inférieur ou au plus égal au nombre minimum de crayons contenus dans chacune des rangées verticales du faisceau.

Comme l'illustre en particulier la figure 8, la largeur de la cassette 44 est supérieure à la largeur du faisceau en position d'attente. Les logements 54 délimités par les cloisons intermédiaires 52 comprennent une première série de logements situés sur la partie gauche de la cassette 44 sur la figure 8, le nombre de ces logements étant identique à celui des rangées verticales de crayons a en position d'attente. La cassette 44 comprend de plus un certain nombre de logements supplémentaires 54 (neuf sur la figure 8) destinés à recevoir l'excédent de crayons qui ne peut être logé dans la première série de logements 54. Pour éviter tout affaissement des cloisons lors du remplissage de la première série de logements 54, ces deux séries de logements sont séparées par une cloison 52a de plus forte épaisseur.

Pour une raison qui apparaîtra ultérieurement, en des emplacements déterminés de sa longueur, la cassette 44 est pourvue d'encoches transversales 56 (figure 9) qui s'étendent à la fois dans les cloisons latérales 50, dans les cloisons intermédiaires 52 et 52a et en partie dans le fond 48 de la cassette.

Pour compléter l'installation permettant d'introduire dans la cassette 44 le faisceau de crayons a en position d'attente, on voit notamment sur les figures 2 et 4 que cette installation comprend également une plaque horizontale 58 située en-dessous du faisceau de crayons en position d'attente et mobile verticalement à l'intérieur du banc 42 supportant la cassette 44. La commande du déplacement vertical de cette plaque 58 (flèche $F_5$ sur la figures 4) est réalisée par exemple au moyen d'un mécanisme vis-écrou à renvois d'angles désigné globalement sur les figures 2 et 4 par la référence 60.

La plaque 58 porte un certain nombre de barres de supportage horizontales 62 qui sont disposées en face des encoches 56 de la cassette, de façon à pouvoir pénétrer dans ces encoches comme l'illustrent notamment les figures 5, 8 et 9.

Lorsqu'on désire effectuer le remplissage de la cassette 44 par un faisceau de crayons maintenu en position d'attente par les peignes 20 et 22, la cassette 44 est amenée en-dessous de ce faisceau de telle sorte que chacune des rangées verticales de crayons soit verticalement alignée avec l'un des logements 54 situés à la gauche de la cloison 52a sur la figure 8. La plaque 58 est alors amenée en position haute à l'aide du mécanisme 60, de telle sorte que les barres de supportage 62 soient situées immédiatement en-dessous du faisceau de crayons.

Dans un premier temps, les peignes horizontaux 22 sont ensuite amenés en position escamotée par une translation appropriée de la barre à encoches 40. Dans chacune des rangées verticales de crayons délimitées par les dents 20a des peignes verticaux restant en place, les crayons s'empilent alors les uns sur les autres en restant en appui sur les barres de supportage 62.

Dans un deuxième temps, ces barres de supportage sont descendues lentement sous l'action du mécanisme 60, (flèche $F_5$ sur les figures 4 et 8). Cette descente des barres de supportage 62 se poursuit jusqu'à ce que le crayon inférieur de chacune des rangées se trouve dans le fond du logement 54 correspondant. Les logements 54 situés à droite de la cloison intermédiaire 52a sur la figure 8 sont alors remplis de crayons.

Dans le mode de réalisation représenté, le nombre de crayons contenus dans chacun des logements 54 est inférieur au nombre de crayons se trouvant initialement dans chacune des rangées verticales du faisceau. Par conséquent, un certain nombre de crayons se trouvent alors au-dessus de la cassette dans les différentes rangées verticales délimitées par les dents 20a des peignes verticaux 20.

Afin de remplir les logements 54 restants de la cassette 44 avec ces crayons, on déplace ensuite pas-à-pas la cassette 44 vers la gauche en considérant la figure 8, à l'aide du mécanisme 46 (flèche $F_4$ sur la figure 8). Le pas d'avance de la cassette selon la flèche $F_4$ est égal au pas du réseau séparant les rangées verticales de crayons (a). Ainsi, à chaque avance de la cassette, un nouveau logement 54 se présente en-dessous de chaque colonne verticale de crayons. De cette manière, les logements 54 situés à la droite de la cloison 52a sur la figure 8 sont remplis un à un par les crayons restant entre les dents du peigne 20, ces crayons chutant par gravité dans ces logements 54.

Le nombre de logements 54 est déterminé en fonction du nombre de crayons contenus dans chaque faisceau, afin que tous les crayons d'un faisceau en provenance d'un assemblage de combustible nucléaire puissent être logés dans la cassette 44.

Comme l'illustre très schématiquement la figure 9, lorsque tous les crayons a d'un assemblage ont été transférés dans la cassette 44, les extrémités des crayons font saillie par les extrémités ouvertes de cette dernière. Connaissant le nombre de crayons contenus initialement dans un assemblage, il est alors possible de contrôler qu'aucun crayon n'est resté coincé dans les peignes, en comptant les crayons logés dans la cassette à l'une de leurs extrémités ou, de préférence, à chaque extrémité.

A cet effet, on utilise des moyens de comptage d'un type quelconque, portés par une plaque 63. Cette plaque est par exemple articulée sur le banc 42 autour d'un axe 65, de façon à être normalement escamotée (flèche $F_6$) sous l'action d'un dispositif de commande tel qu'un vérin, schématisé par la flèche 67 sur la figure 9.

Lorsque ce contrôle a été effectué, le mécanisme 46 est actionné en continu dans le sens de la flèche $F_4$ (figure 8) pour amener la cassette dans une position d'évacuation dans laquelle elle est latéralement décalée par rapport à la partie de l'installation décrite précédemment. Cette position est représentée en traits pleins sur la figure 3.

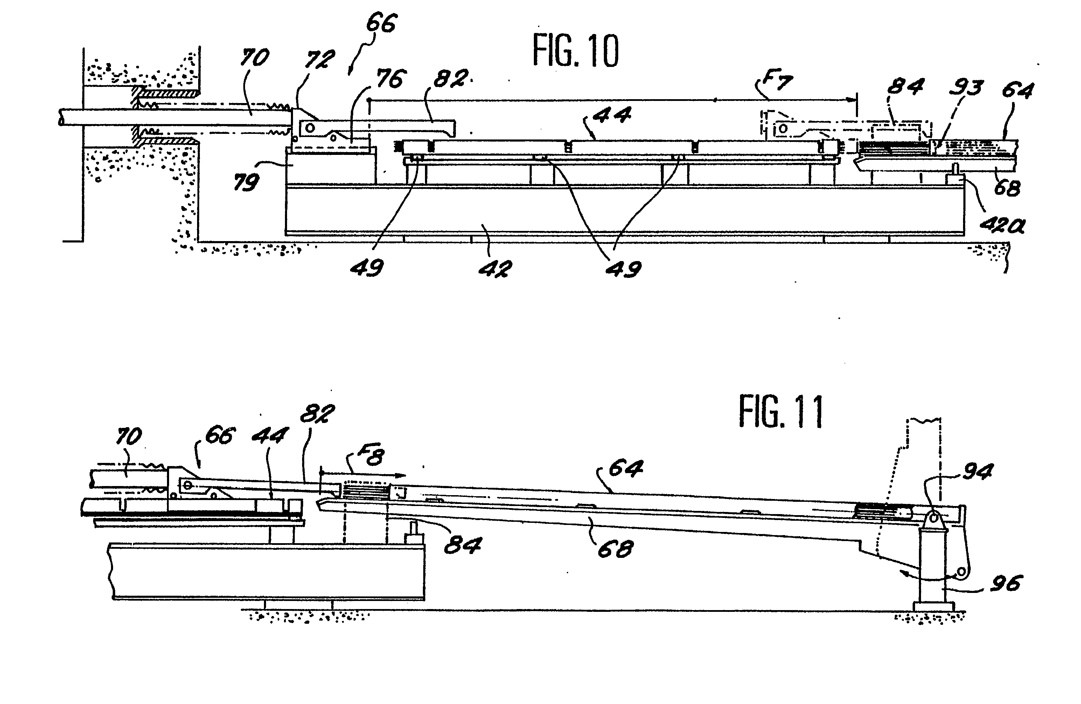

La figure 10 représente une autre partie de l'installation selon l'invention permettant de transférer les crayons a de la cassette 44 dans leur étui de stockage définitif 64.

De façon plus précise, on voit sur la figure 10 que lorsque l'étui 64 rempli de crayons se trouve dans sa position latérale d'évacuation représentée schématiquement sur la figure 3, l'une des extrémités de la cassette 44 se trouve dans le prolongement d'un dispositif poussoir 66 alors que l'autre extrémité de la cassette est située dans le prolongement d'un basculeur 68 portant l'étui 64.

Bien entendu, les dimensions de l'étui 64, qui présente une section carrée ou rectangulaire, sont adaptées afin que l'ensemble des crayons contenus dans les différents logements de la cassette 44 puissent être introduits dans cet étui après rapprochement des différentes rangées verticales de crayons contenues dans chacun des logements de la cassette. Plus précisément, les dimensions de l'étui 64 sont généralement déterminées à l'avance en fonction des conditions de stockage ultérieures et c'est la cassette 44 qui est dimensionnée de façon à permettre ce transfert. En particulier, la hauteur intérieure de l'étui 64 est légèrement supérieure à la hauteur des logements de la cassette 44 et la largeur de l'étui 64 est légèrement supérieure à la largeur cumulée de l'ensemble des logements de la cassette.

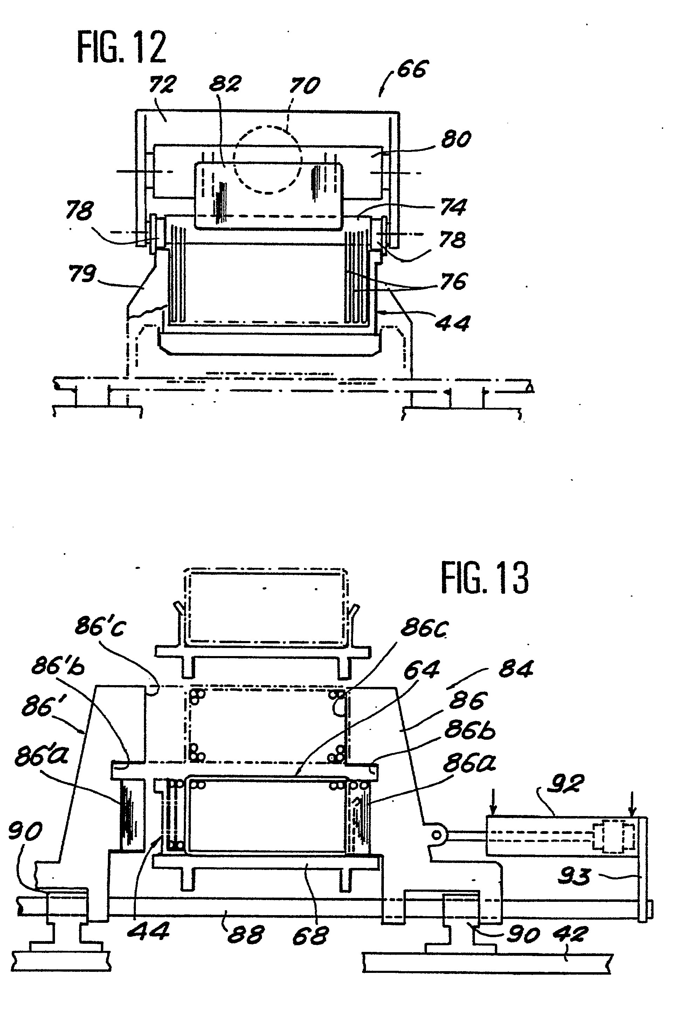

Comme l'illustrent plus précisément les figures 10 et 12, le dispositif poussoir 66 comprend une tige de poussée horizontale 70 dont l'axe est parallèle aux axes des crayons contenus dans la cassette. A son extrémité, la tige 70 porte un support 72 sur lequel est montée, par un axe horizontal 74 orthogonal à l'axe de la tige, une série de poussoirs 76. Le nombre de ces poussoirs 76 est identique au nombre de logements 54 de la cassette. Chaque poussoir est constitué par une plaque verticale de largeur légèrement inférieure à la largeur d'un logement 54 et de hauteur au moins égale à la hauteur d'un tel logement.

Lorsque la cassette est en position d'évacuation, chacun des poussoirs 76 se trouve dans le prolongement de l'un des logements 54, de sorte que l'actionnement de la tige de poussée 70 dans le sens de la flèche $F_7$ (figure 10) a pour effet de pousser simultanément tous les crayons contenus dans la cassette 44 vers l'étui 64. L'actionnement de la tige 70 peut être effectué par tout moyen approprié tel qu'un vérin (non représenté). Le guidage du support 72 par rapport à la cassette 44 est obtenu grâce à deux galets 78 portés par l'axe 74 et roulant successivement sur une pièce de guidage 79 portée par le banc 42, puis sur les parois latérales de la cassette 44.

Au-dessus des poussoirs 76, le support 72 porte également autour d'un axe 80 parallèle à l'axe 74, un poussoir 82 dont l'extrémité plane et rectangulaire présente des dimensions légèrement supérieures aux dimensions présentées en section par l'étui 64. Ce poussoir 82 est destiné à pousser simultanément l'ensemble des crayons à la fin de l'opération de mise en étui, comme on le verra ultérieurement (flèche $F_8$ sur la figure 11).

Pour rapprocher les différentes rangées verticales de crayons contenues dans la cassette et permettre ainsi l'introduction de ces crayons dans l'étui 64, on place entre l'extrémité de la cassette 44 opposée au dispositif poussoir 66 et l'étui 64 une pièce de transformation 84 représentée plus en détail sur la figure 13.

Cette pièce de transformation 84 comprend deux mâchoires latérales 86 et 86′ montées sur deux colonnes horizontales 88 s'étendant transversalement en-dessous de l'extrémité du basculeur 68 portant l'étui 64 selon une direction orthogonale aux axes des crayons a.

De façon plus précise, la mâchoire 86′ est solidaire des colonnes 88, alors que la mâchoire 86 est reçue de façon coulissante sur ces colonnes. Les colonnes 88 sont elles-mêmes montées de façon coulissante par des paliers 90 sur le banc 42 supportant par ailleurs la cassette 44. Le corps d'un vérin à double effet 92 est soldarisé par une plaque 93 aux extrémités des colonnes 88 situées du côté de la mâchoire 86. La tige de ce même vérin est articulée sur cette mâchoire 86, de sorte que l'actionnement dans l'un ou l'autre sens du vérin 92 à double effet permet soit de rapprocher les mâchoires 86 et 86′ (comme l'illustre la moitié droite de la figure 13), soit de les éloigner (comme l'illustre la moitié gauche de la figure 13). Dans les deux cas les mâchoires se déplacent l'une après l'autre, le déplacement de la seconde mâchoire intervenant après la venue en butée de la première sur un palier 90.

Dans leur partie inférieure et sur une hauteur correspondant à la hauteur de l'étui 64 et de la cassette 44, les mâchoires 86 et 86′ présentent deux surfaces planes et verticales en regard 86a, 86′a, inclinées par rapport à la direction des crayons contenus dans la cassette. Cette inclinaison est telle que lorsque les mâchoires 86 sont rapprochées, l'écartement entre les surfaces 86a et 86′a du côté de la cassette 44 soit pratiquement égal à la largeur de cette cassette alors que l'écartement entre les surfaces 86a et 86′a du côté de l'étui 64 est pratiquement égal à la largeur de l'étui 64. Les mors 86 et 86′ sont évidés en-dessous des surfaces 86a et 86′a pour permettre le passage de l'extrémité du basculeur 68.

Au-dessus de ces surfaces 86a, 86′a, les mors 86 et 86′ présentent également une encoche 86b et 86′b, apte à recevoir l'extrémité du basculeur 68. Au-dessus de cette encoche, les mâchoires 86, 86′ présentent à nouveau deux surfaces planes et verticales en regard 86c et 86′c, ces surfaces étant parallèles entre elles et aux axes des crayons. Lorsque les mâchoires sont rapprochées, l'écartement entre ces surfaces correspond à la largeur de l'étui 64, ces surfaces 86c et 86'c s'étendant sur une hauteur sensiblement égale à celle de l'étui.

Enfin et comme l'illustre la figure 11, à son extrémité opposée à la pièce 84, le support basculeur 68 est articulé par un axe 94 sur une pièce 96 reposant sur le sol.

Dans un premier temps, le basculeur 68 est amené en position horizontale afin que l'étui 64 se trouve directement dans le prolongement de la cassette 44. Dans cette position, représentée sur la figure 10, l'extrémité du basculeur repose sur une pièce de supportage 42a monté sur le banc 42.

Après cette mise en place du basculeur 68 autorisée par un écartement des mâchoires de la pièce 84, ces mâchoires sont resserrées en agissant sur le vérin 92 afin que l'écartment entre les surfaces 86a et 86'a à l'entrée et à la sortie correspondent respectivement à la largeur de la cassette et à la largeur de l'étui.

Le transfert des crayons de la cassette dans l'étui peut alors être effectué en actionnant la tige 70. Les poussoirs 76 sont ainsi amenés au contact des extrémités des crayons opposées à l'étui 64. Au fur et à mesure du déplacement vers la droite de la série de poussoirs 76 (flèche F₇), tous les crayons sont ainsi introduits simultanément dans l'étui 64 au travers de la pièce 84 qui effectue le rapprochement des rangées verticales de crayons.

De préférence, on a pris le soin au préalable de placer à l'entrée de l'étui 64 un fond 93 (figure 10) dans lequel viennent se loger les extrémités correspondantes des crayons, ce fond coulissant à l'intérieur de l'étui au fur et à mesure de l'introduction des crayons.

Lorsque le dispositif poussoir 66 arrive dans la position représentée en traits mixtes sur la figure 9, dans laquelle les poussoirs 76 affleurent la pièce de transition 84, il n'est plus possible de poursuivre l'introduction à l'aide des poussoirs 76.

Comme l'illustre en particulier la figure 11, le basculeur 68 est alors légèrement incliné afin d'amener ce basculeur au niveau des encoches 86b, 86'b sur les mâchoires de la pièce 84, après écartement de ces mâchoires. Les mâchoires 86 sont ensuite resserrées, afin d'immobiliser le basculeur 68 dans cette position. Ce resserrement a également pour effet d'enserrer latéralement les extrémités des crayons qui se trouvent encore en dehors de l'étui entre les faces parallèles 86c dont l'écartement correspond alors à la largeur intérieure de l'étui 64.

Comme on le voit sur la figure 11, dans cette position du basculeur 68 le poussoir 82 du dispositif 66 se trouve alors directement dans le prolongement des extrémités des crayons. Une nouvelle poussée exercée sur le dispositif 66 par l'intermédiaire de la tige 70 a donc pour effet de terminer l'introduction des crayons dans l'étui 64.

A ce stade, le support basculeur 68 peut par exemple être amené en position verticale comme on l'a représenté en traits mixtes sur la figure 11, afin de préparer l'acheminement ultérieur de l'étui 64 vers sa piscine de stockage.

Grâce à l'installation qui vient d'étre décrite en détail, la mise en étui des crayons s'effectue en deux temps, une première étape consistant à rapprocher les crayons selon une première direction du réseau à pas carré formé par ceux-ci. Cette première étape est rendu possible par l'utilisation d'une cassette intermédiaire. Au cours d'une deuxième étape, on effectue le rapprochement des crayons selon la deuxième direction du réseau à pas carré formé initialement par le faisceau en transférant simultanément tous les crayons de la cassette dans l'étui.

Grâce à cette conception orginale, la mise en étui des crayons peut être effectuée dans toutes les conditions sans risque de coinçage des crayons, ce qui n'était pas possible avec les techniques traditionnelles.

Compte tenu de l'esprit général de l'invention qui vient d'étre exposé, on comprendra que l'invention n'est pas limitée au mode de réalisation préféré qui vient d'être décrit à titre d'exemple. Ainsi, si la descente par gravité des crayons dans la cassette s'avérait impossible dans le cas de crayons particulièrement déformés, il est possible d'adjoindre à l'installation décrite un système de poussée facilitant l'introduction des crayons dans la cassette. De même, on comprendra que différentes parties de l'installation telles que le dispositif poussoir 66, le mécanisme de commande des peignes, la pièce 84 ainsi que les moyens de préhension permettant d'amener les crayons en position d'attente au-dessus de la cassette peuvent être modifiés sans sortir du cadre de l'invention.

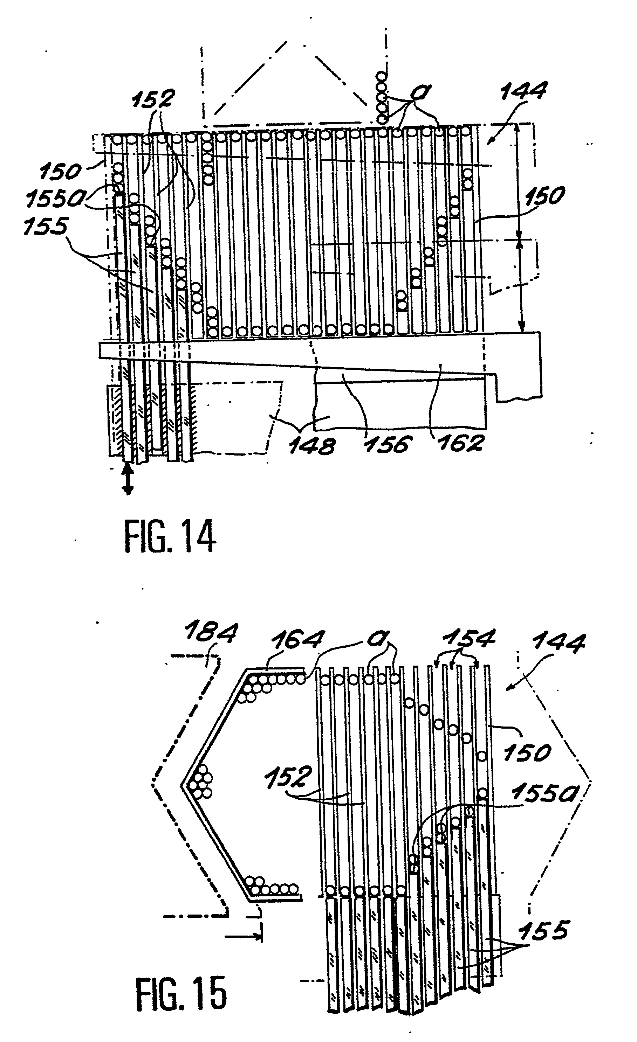

Enfin, et comme l'illustrent à titre d'exemple les figures 14 à 16, de légères modifications apportées à l'installation décrite précédemment permettent d'introduire les crayons dans un étui de section non rectangulaire, par exemple en forme de trapèze, de triangle ou d'hexagone.

Plus précisément, les figures 14 à 16 illustrent une variante de réalisation dans laquelle les crayons sont introduits dans un étui de section hexagonale. Les éléments analogues à ceux de l'installation décrite précédemment sont désignés par les mêmes chiffres de référence, augmentés de 100.

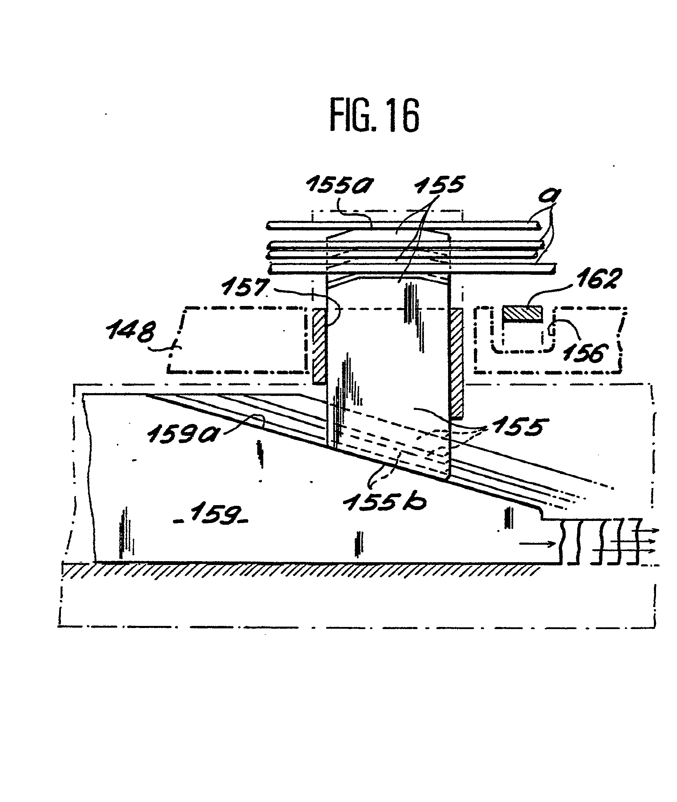

Toute la partie de l'installation permettant d'amener le faisceau de crayons a au-dessus de la cassette 144 reste inchangée. En revanche, la cassette est modifiée comme l'illustrent notamment les figures 14 et 16.

Ainsi, si la cassette présente toujours une section verticale rectangulaire et comporte un fond horizontal 148 portant deux cloisons latérales verticales 150 et des cloisons intermédiaires 152 parallèles aux cloisons 150 et délimitant des logements 154 de largeur légèrement supérieure au diamètre des crayons a, le fond d'au moins une partie des logements 154 est conçu de façon à pouvoir être déplacé verticalement. Comme le montrent les figures 14 et 16, ce résultat est obtenu au moyen de lames 155 de différentes hauteurs placées dans chacun des logements 154 et dont le bord supérieur 155a définit le fond de ces logements.

Comme précédemment, la descente des crayons a dans les logements 154 est contrôlée par des de supportage 162 mobiles verticalement dans des encoches 156 formées dans la cassette. Les lames 155 ne font donc pas toute la longueur de la cassette, de sorte que le fond de chaque logement comprend en réalité plusieurs lames 155 réparties régulièrement sur toute sa longueur afin d'empêcher la flexion des crayons entre les lames.

Comme le montre la figure 16, chacune des lames 155 est montée coulissante selon une direction verticale dans un passage 157 formé à cet effet dans le fond 148 de la cassette. De plus, chaque lame 155 comporte un bord inférieur incliné 155b formant une rampe avec laquelle coopère une rampe complémentaire 159a formée sur un organe 159 mobile selon l'axe longitudinal de la cassette, dans le fond 148 de celle-ci. Plus précisément, chacune des lames 155 formant le fond de l'un des logements 154 est commandé par un organe indépendant 159.

De cette manière, il est clair qu'en déplaçant les organes 159 dans l'un ou l'autre sens, on peut commander la montée ou la descente des lames correspondantes 155 et, par conséquent l'ajustement de la hauteur du fond de chaque logement 154 de la cassette.

En se reportant à la figure 14, on voit qu'il est ainsi possible de disposer le fond des logements 154 les plus proches des bords de la cassette, de telle sorte que la hauteur du fond de ces logements augmente progressivement vers l'extérieur de la cassette. Cette position étant adoptée avant le chargement de la cassette 144 et le procédé de chargement restant par ailleurs identique à celui qui a été décrit précédemment, on obtient ainsi un remplissage de la cassette dans une section ayant approximativement la forme d'un trapèze isocèle.

Lorsque le chargement est terminé et comme l'illustre la moitié droite de la figure 15, les lames 155 les plus proches des bords de la cassette sont descendus d'une demi-hauteur, par rapport à la hauteur relative qui les séparait des fonds des logements centraux les plus profonds, lors du chargement de la cassette. On donne ainsi au faisceau de crayons $a$ présents dans la cassette une section en forme d'hexagone déformé dont la largeur est supérieure à la hauteur d'une valeur approximativement égale à l'épaisseur cumulée des cloisons intermédiaires 152.

En plaçant la cassette dans le prolongement d'un étui 164 de section hexagonale et en interposant une pièce de transformation adaptée (représentée schématiquement en 184), comme l'illustre la moitié gauche de la figure 15, on effectue ensuite le chargement de l'étui de la manière décrite précédemment.

Selon la forme de l'étui à charger, on comprend que l'étape de descente des lames 155 consécutive au chargement de la cassette peut être supprimée. Bien entendu, des cassettes comprenant des lames 155 de caractéristiques différentes peuvent être utilisées selon la forme de la section de l'étui à charger.

## Revendications

1. Procédé de mise en étui d'un faisceau de crayons (a) disposés en $n$ rangées parallèles d'au moins $r$ crayons, selon un réseau à pas carré dans un assemblage de combustible nucléaire, ce procédé étant caractérisé en ce qu'il consiste :
- à disposer le faisceau de crayons (a) horizontalement selon ledit réseau dans une position d'attente au-dessus d'une cassette (44) comprenant $p$ logements (54) séparés par des cloisons (52, 52a), $p$ étant un entier au moins égal à $n$, de telle sorte que chaque rangée de crayons se trouve au-dessus d'un logement de la cassette,
- à introduire les crayons (a) dans les logements (54) de la cassette (44),
- à disposer la cassette (44) dans le prolongement horizontal d'un étui (64), en interposant entre la cassette et l'étui, une pièce de transformation (84) dont la largeur diminue progressivement de la cassette vers l'étui, d'une valeur égale à l'épaisseur cumulée des cloisons (52, 52a) de la cassette ; et
- à transférer les crayons (a) de la cassette (44) dans l'étui (64) au travers de la pièce de transformation (84), en poussant simultanément tous les crayons.

2. Procédé selon la revendication 1, caractérisé en ce que le nombre de crayons (a) dans certaines des rangées étant supérieur à $r$, on utilise une cassette (44) dont chaque logement (54) peut contenir au plus $s$ crayons, $s$ étant un entier au plus égal à $r$, et comprenant un nombre $p$ de logements supérieur à $n$ et tel que le produit $p.s$ soit au moins égal au nombre de crayons du faisceau, et en ce que, afin d'introduire les crayons dans les logements, après avoir fait descendre $s$ crayons de chaque rangée dans chacun des $n$ logements situés en-dessous des $n$ rangées de crayons, on effectue un déplacement horizontal relatif perpendiculairement aux crayons entre la cassette (44) et les crayons du faisceau non introduits dans les $n$ logements précités, dits "crayons restants" afin d'amener les $(p-n)$ logements restants successivement en-dessous de chaque rangée de crayons et de faire descendre lesdits crayons restants dans ces $(p-n)$ logements.

3. Procédé selon l'une quelconque des revendications 1 et 2, caractérisé en ce qu'on dispose le faisceau de crayons (a) horizontalement dans la position d'attente en maintenant les crayons selon ledit réseau à pas carré par au moins un jeu de peignes horizontaux (22) et un jeu de peignes verticaux (20), et en ce qu'on escamote le jeu de peignes horizontaux (22) avant d'introduire les crayons dans les logements (54) de la cassette (44).

4. Procédé selon la revendication 3, caractérisé en ce que, avant de disposer le faisceau de crayons (a) horizontalement au-dessus de la cassette (44), on élimine une partie de l'assemblage pour dégager l'une des extrémités des crayons du faisceau, on dispose l'assemblage dans le prolongement de ladite position d'attente et on extrait le faisceau de crayons de l'assemblage pour l'amener directement dans cette position d'attente, les peignes horizontaux (22) et verticaux (20) se mettant en place au fur et à mesure du déplacement du faisceau vers cette position.

5. Procédé selon l'une quelconque des revendications 1 à 4, caractérisé en ce qu'avant d'introduire les crayons (a) dans l'étui (64), on place à l'entrée de ce dernier un fond (93) dans lequel viennent se loger les extrémités des crayons tournées vers l'étui, ce fond étant apte à coulisser dans l'étui avec les crayons lors de l'introduction de ces derniers.

6. Procédé selon l'une quelconque des revendications 1 à 5, caractérisé en ce que, avant d'introduire les crayons (a) dans les logements (54) de la cassette (44), on déplace vers le haut le fond d'au moins certains des logements, afin de réduire le nombre de crayons (a) pouvant être reçus dans chaque logement dont le fond est déplacé.

7. Procédé selon la revendications 6, caractérisé en ce que, après avoir introduit les crayons (a) dans les logements (54) de la cassette (44), on déplace vers le bas le fond d'au moins certains des logements dont le fond a été déplacé vers le haut auparavant, afin que les crayons (a) contenus dans ces logements soient au même niveau que la partie de l'étui dans laquelle ils doivent être introduits.

8. Installation de mise en étui d'un faisceau de crayons (a) disposés en $n$ rangées parallèles selon un réseau à pas carré dans un assemblage de combustible nucléaire, caractérisée en ce qu'elle comprend :
- des moyens (20, 22) pour maintenir le faisceau de crayons horizontalement selon ledit réseau dans une position d'attente au-dessus d'une cassette (44) comprenant $p$ logements (54) séparés par des cloisons (52, 52a), $p$ étant un entier au moins égal à $n$, de telle sorte que chaque rangée de crayons se trouve au-dessus d'un logement de la cassette,
- des moyens (60, 62, 46) pour introduire les crayons (a) dans les logements (54) de la cassette (44),
- des moyens (66) pour pousser simultanément tous les crayons (a) contenus dans la cassette (44) pour introduire ces crayons dans un étui (64) disposé horizontalement dans le prolongement de la cassette, par l'intermédiaire d'une pièce de transformation (84) interposée entre la cassette et l'étui et dont la largeur diminue progressivement de la cassette vers l'étui, d'une valeur égale à l'épaisseur cumulée des cloisons (52, 52a) de la cassette.

9. Installation selon la revendication 8 , caractérisée en ce que les moyens pour introduire les crayons (a) dans les logements (54) de la cassette (44) comprennent au moins deux pièces horizontales de supportage (62) s'étendant perpendiculairement par rapport aux crayons et sur lesquelles ces derniers peuvent reposer par gravité, et des moyens (60) pour déplacer ces pièces (62) verticalement entre une position haute dans laquelle lesdites pièces sont situées au-dessus de la cassette (44) et une position basse dans laquelle lesdites pièces sont situées en-dessous du fond des logements (54), dans des encoches verticales (56) formées dans la cassette au droit des pièces de supportage (62).

10. Installation selon l'une quelconque des revendications 8 et 9 , caractérisée en ce que, le nombre de crayons (a) de certaines des rangées étant supérieur à $r$, les logements (54) de la cassette (44) ont une profondeur apte à loger $s$ crayons, $s$ étant un entier au plus égal à $r$, la cassette (44) comprend $p$ logements (54), $p$ étant un entier supérieur à $n$ tel que le produit $p.s$ soit au moins égal au nombre de crayons (a) du faisceau, et les moyens pour introduire les crayons dans les logements comprennent des moyens (46) pour effecteur un déplacement horizontal relatif perpendiculairement aux crayons entre la cassette (44) et lesdits moyens (20, 22) pour maintenir le faisceau de crayons horizontalement.

11. Installation selon l'une quelconque des revendications 8 à 10, caractérisée en ce que les moyens pour maintenir le faisceau de crayons horizontalement comprennent au moins un jeu de peignes horizontaux (22) escamotables et un jeu de peignes verticaux (20) escamotables.

12. Installation selon la revendication 11, caractérisée en ce qu'elle comprend de plus des moyens pour maintenir l'assemblage horizontalement dans le prolongement de la position d'attente, des moyens (17, 19) pour extraire le faisceau de crayons (a) de cet assemblage et pour amener ce faisceau dans la position d'attente et des moyens (30, 40) pour mettre en place automatiquement les peignes (20, 22) au fur et à mesure du déplacement du faisceau vers cette position.

13. Installation selon l'une quelconque des revendications 8 à 12, caractérisée en ce que le fond d'au moins certains des logements de la cassette est formé en partie sur des pièces mobiles (155) permettant de faire varier la hauteur de ces logements.

14. Installation selon la revendication 13, caractérisée en ce que des moyens (159) sont prévus pour commander un déplacement vertical des pièces mobiles.

## Patentansprüche

1. Verfahren zum Einsetzen eines Stabbündels (a), das in $n$ parallelen Reihen mit wenigstens $r$ Stäben angeordnet ist, entsprechend einem quadratischen Netzwerk in eine Kernbrennstoffanordnung, wobei das Verfahren dadurch gekennzeichnet ist, daß es darin besteht:
- das Stabbündel (a) horizontal entsprechend dem Netzwerk in einer Warteposition über einer Kassette (44) mit $p$ durch Zwischenwände (52, 52a) getrennten Abteilungen (54) anzuordnen, wobei $p$ eine ganze Zahl größer gleich $n$ ist, so daß jede Stabreihe sich über einer Abteilung der Kassette befindet,
- die Stäbe (a) in die Abteilungen (54) der Kassette (44) einzuführen,
- die Kassette (44) in der horizontalen Verlängerung eines Gehäuses (64) anzuordnen, indem man zwischen der Kassette und dem Gehäuse ein Transformationsteil (84) anordnet, dessen Brelte sich zunehmend von der Kassette zum Gehäuse mit einem Wert verringert, der gleich dem der addierten Breite der Zwischenwände (52, 52a) der Kassette ist; und
- die Stäbe (a) von der Kassette (44) in das Gehäuse (64) über das Transformationsteil (84) zu übertragen, indem man gleichzeitig alle Stäbe schiebt.

2. Verfahren nach Anspruch 1, dadurch gekennzeichnet, daß man, wenn die Zahl der Stäbe (a) in bestimmten Reihen größer als $r$ ist, eine Kassette (44) verwendet, bei der jede Abteilung (54) höchstens $s$ Stäbe enthalten kann, wobei $s$ eine ganze Zahl kleiner gleich $r$ ist, und die eine Anzahl $p$ von Abteilungen über n aufweist, so daß p · s wenigstens gleich der Zahl der Stäbe des Bündels ist, und daß man zum Einführen der Stäbe in die Abteilungen, nachdem man s Stäbe jeder Reihe in jede der n unter den n Stabreihen befindlichen Abteilungen hinuntergleiten ließ, eine relative Horizontalbewegung senkrecht zu den Stäben zwischen der Kassette (44) und den Stäben des nicht in die n vorgenannten Abteilungen eingeführten Bündels, den sogenannten «verbleibenden Stäben», durchführt, um die (p–n) verbleibenden Abteilungen nacheinander unter jede Stabreihe zu bringen und die verbleibenden Stäbe in diese (p–n) Abteilungen hinuntergleiten zu lassen.

3. Verfahren nach einem der Ansprüche 1 und 2, dadurch gekennzeichnet, daß man das Stabbündel (a) horizontal in der Warteposition anordnet, indem man die Stäbe entsprechend dem quadratischen Netzwerk mittels wenigstens einer Gruppe horizontaler Kämme (22) und einer Gruppe vertikaler Kämme (20) hält, und daß man die Gruppe horizontaler Kämme (22) einzieht, bevor man die Stäbe in die Abteilungen (54) der Kassette (44) einführt.

4. Verfahren nach Anspruch 3, dadurch gekennzeichnet, daß man vor dem Anordnen des Stabbündels (a) horizontal über der Kassette (44), einen Teil der Anordnung entfernt, um eines der Stabenden des Bündels freizulegen, daß man die Anordnung in der Verlängerung der Wartestellung anordnet und daß man das Bündel aus der Anordnung hinauszieht, um es direkt in diese Wartestellung zu bringen, wobei die horizontalen (22) und vertikalen (20) Kämme sich entsprechend der Bewegung des Bündels in diese Stellung in Position bringen.

5. Verfahren nach einem der Ansprüche 1 bis 4, dadurch gekennzeichnet, daß man vor dem Einführen der Stäbe in das Gehäuse (64) an dessen Eingang einen Boden (93) anordnet, auf den sich die zum Gehäuse gewandten Enden der Stäbe anordnen, wobei dieser Boden geeignet ist, mit den Stäben in das Gehäuse bei der Einführung der letzteren zu gleiten.

6. Verfahren nach einem der Ansprüche 1 bis 5, dadurch gekennzeichnet, daß man vor dem Einführen der Stäbe (a) in die Abteilungen (54) der Kassette (44) den Boden von wenigstens bestimmten Abteilungen nach oben bewegt, um die Zahl der Stäbe (a) zu verringern, die in jeder Abteilung aufgenommen werden können, deren Boden bewegt ist.

7. Verfahren nach Anspruch 6, dadurch gekennzeichnet, daß man nach Einführen der Stäbe (a) in die Abteilungen (54) der Kassette (44) den Boden von wenigstens bestimmten Abteilungen, deren Boden zuvor nach oben bewegt wurde, nach unten bewegt, damit die in diesen Abteilungen enthaltenen Stäbe (a) sich auf der gleichen Höhe befinden wie der Teil des Gehäuses, in den sie eingeführt werden sollen.

8. Einrichtung zum Einsetzen eines Stabbündels (a), das in n parallelen Reihen angeordnet ist, entsprechend einem quadratischen Netzwerk in eine Kernbrennstoffanordnung, dadurch gekennzeichnet ist, daß sie aufweist:
– Vorrichtungen (20, 22), um das Stabbündel horizontal entsprechend dem Netzwerk in einer Warteposition über einer Kassette (44) mit p durch Zwischenwände (52, 52a) getrennten Abteilungen (54) zu halten, wobei p eine ganze Zahl größer gleich n ist, so daß jede Stabreihe sich über einer Abteilung der Kassette befindet,
– Vorrichtungen (60, 62, 46), um die Stäbe (a) in die Abteilungen (54) der Kassette (44) einzuführen,
– Vorrichtungen (66), um alle in der Kassette (44) enthaltenen Stäbe (a) gleichzeitig anzustoßen, um diese Stäbe mittels eines zwischen der Kassette und dem Gehäuse angeordneten Transformationsteils (84), dessen Breite sich zunehmend von der Kassette zum Gehäuse mit einem Wert verringert, der gleich dem der addierten Breite der Zwischenwände (52, 52a) der Kassette ist, in ein Gehäuse (64) einzuführen, das horizontal in der Verlängerung der Kassette (44) angeordnet ist.

9. Einrichtung nach Anspruch 8, dadurch gekennzeichnet, daß die Vorrichtungen zum Einführen der Stäbe (a) in die Abteilungen (54) der Kassette (44) wenigstens zwei horizontale Trägerstücke (62), die sich senkrecht zu den Stäben erstrecken und auf denen die letzteren sich aufgrund der Gravitationskraft stützen können, und Vorrichtungen (60) aufweisen, um diese Stücke (62) vertikal zwischen einer hohen Stellung, in der die Stücke sich über der Kassette (44) befinden, und einer tiefen Position, in der sich die Stücke unter dem Boden der Abteilungen (54) befinden, in vertikalen, in der Kassette rechts der Trägerstücke (62) gebildeten Kerben (56) zu bewegen.

10. Einrichtung nach einem der Ansprüche 8 und 9, dadurch gekennzeichnet, daß, wenn die Zahl der Stäbe (a) in bestimmten Reihen größer als r ist, die Abteilungen (54) der Kassette (44) eine Tiefe haben, die geeignet ist, s Stäbe aufzunehmen, wobei s eine ganze Zahl kleiner gleich r ist, daß die Kassette (44) p Abteilungen (54) umfaßt, wobei p größer als n ist, so daß das Produkt p · s wenigstens gleich der Zahl der Stäbe des Bündels ist, und daß die Vorrichtungen zum Einführen der Stäbe in die Abteilungen Vorrichtungen (46) umfassen, um eine relative Horizontalbewegung senkrecht zu den Stäben zwischen der Kassette (44) und den Vorrichtungen (20, 22) zum horizontalen Halten des Stabbündels durchzuführen.

11. Einrichtung nach einem der Ansprüche 8 bis 10, dadurch gekennzeichnet, daß die Vorrichtungen zum horizontalen Halten des Stabbündels wenigstens eine Gruppe einziehbarer, horizontaler Kämme (22) und eine Gruppe einziehbarer, vertikaler Kämme (20) umfassen.

12. Einrichtung nach Anspruch 11, dadurch gekennzeichnet, daß sie außerdem Vorrichtungen zum horizontalen Halten der Anordnung in der Verlängerung der Wartestellung, Vorrichtungen (17, 19) zum Herausziehen des Stabbündels (a) aus der Anordnung und zum in die Wartestellungbringen und Vorrichtungen (30, 40) zum automatischen in Stellungbringen der Kämme (20, 22) entsprechend der Bewegung des Bündels in diese Stellung aufweist.

13. Einrichtung nach einem der Ansprüche 8 bis 12, dadurch gekennzeichnet, daß der Boden wenigstens bestimmter Abteilungen der Kassette teilweise auf beweglichen Teilen (155) geformt ist, die ermöglichen, die Höhe der Abteilungen zu variieren.

14. Einrichtung nach Anspruch 13, dadurch gekennzeichnet, daß Vorrichtungen (159) vorgesehen sind, um eine vertikale Bewegung der beweglichen Teile zu steuern.

## Claims

1. Process for placing in a case a bundle of rods (a) arranged in $n$ parallel rows of at least $r$ rods, in accordance with a square pitch lattice in a nuclear fuel assembly, characterized in that it comprises placing the bundle of rods (a) horizontally in accordance with said lattice in a waiting position above a cassette (44) having $p$ recesses (54) separated by partitions (52, 52a), $p$ being an integer at least equal to $n$, so that each row of rods is located above a recess in the cassette, introducing the rods (a) into the cassette (44) recesses (54), placing the cassette (44) in the horizontal extension of a case (64), by interposing between cassette and case a transformation member (84), whose width decreases progressively from cassette to case by a value equal to the cumulative thickness of the cassette partitions (52, 52a) and transferring the rods (a) from the cassette (44) into the case (64) through the transformation member (84) by simultaneously pushing all the rods.

2. Process according to claim 1, characterized in that the number of rods (a) in certain of the rows exceeds $r$, so that use is made of a cassette (44) whereof each recess (54) can contain at the most $s$ rods, $s$ being an integer at the most equal to $r$ and comprising a number $p$ of recesses exceeding $n$ and such that the product $p \cdot s$ is at least equal to the number of rods in the bundle and in that, prior to introducing the rods into the recesses and after lowering $s$ rods of each row into each of the $n$ recesses located below the $n$ rows of rods, there is a relative horizontal displacement perpendicular to the rods between the cassette (44) and the rods of the bundle not introduced into the $n$ aforementioned recesses, called «remaining rods» in order to bring the (p–n) remaining recesses successively below each row of rods and to lower said remaining rods into said (p–n) recesses.

3. A process according to either of the claims 1 and 2, characterized in that the bundle of rods (a) is positioned horizontally in the waiting position, whilst maintaining the rods in accordance with said square pitch lattice by at least one set of horizontal combs (22) and one set of vertical combs (20) and in that the set of horizontal combs (22) is retracted prior to introducing the rods into the cassette (44) recesses (54).

4. Process according to claim 3, characterized in that, prior to placing the bundle of rods (a) horizontally above the cassette (44), part of the assembly is eliminated in order to free one of the ends of the rods of the bundle, the assembly being placed in the extension of said waiting position and the bundle of rods is extracted from the assembly to bring it directly into said waiting position, the horizontal (22) and vertical (20) combs being put into place as the displacement of the bundle towards this position advances.

5. Process according to any one of the claims 1 to 4, characterized in that prior to introducing the rods (a) into the case (64), at the entrance of the latter is placed a base (93), in which are located the ends of the rods turned towards the case, said base being able to slide in the case with the rods during the introduction of the latter.

6. Process according to any one of the claims 1 to 5, characterized in that prior to introducing the rods (a) into the recesses (54) of the cassette (44), the bottom of at least certain of the recesses is displaced upwards, so as to reduce the number of rods (a) which can be received in each recess, whose bottom has been displaced.

7. Process according to claim 6, characterized in that after introducing the rods (a) into the cassette (44) recesses (54), the bottom of at least some of the recesses whose bottom has been displaced upwards beforehand is displaced downwards, so that the rods (a) contained in these recesses are at the same level as that part of the case in which they are to be introduced.

8. Installation for placing in a case a bundle of rods ($a$) arranged in $n$ parallel rows of at least $r$ rods, according to a square pitch lattic in a nuclear fuel assembly, characterized in that it comprises means (20, 22) for maintaining the bundle of rods horizontally in accordance with said lattice in a waiting position above a cassette (44) having $p$ recesses separated by partitions (52, 52a), $p$ being an integer at least equal to $n$, in such a way that each row of rods is positioned above a cassette recess, means (60, 62, 46) for introducing the rods (a) into the cassette (44) recesses (54) and means (66) for simultaneously pushing all the rods (a) contained in the cassette (44) so as to introduce them into a case (64) positioned horizontally in the extension of the cassette, via a transformation member (84) interposed between cassette and case and whose width decreases progressively from the cassette towards the case by a value equal to the cumulative thickness of the cassette partitions (52, 52a).

9. Installation according to claim 8, characterized in that the means for introducing the rods (a) into the cassette (44) recesses (54) comprise at least two horizontal support members (62) extending perpendicularly with respect to the rods and on which the latter can rest by gravity and means (60) for displacing said member vertically between a top position in which said members are located above the cassette (44) and a bottom position in which said members are located below the base of the recesses (54) in vertical notches (56) formed in the cassette to the right of the support members (62).

10. Installation according to either of the claims 8 and 9, characterized in that the number of rods of certain of the rows (a) exceeds $r$, the recesses (54) of the cassette (44) have a depth able to house $s$ rods, $s$ being an integer at the most equal to $r$, the cassette (44) comprising $p$ recesses (54), $p$ being an integer greater than $n$, so that the product $p \cdot s$ is at least equal to the number of rods (1) in the bundle and the means for introducing the rods (a) into the recesses comprise means (46) for effecting a relative horizontal displacement perpendicular to the rods between the cassette (44) and said means (20, 22) in order to horizontally maintain the bundle of rods.

11. Installation according to any one of the claims 8 to 10, characterized in that the means for maintaining the bundle of rods horizontally compres at least one set of retractable horizontal combs (22) and one set of retractable vertical combs (20).

12. Installation according to claim 11, characterized in that it also comprises means for maintaining the assembly horizontally in the extension of the waiting position, means (17, 19) for extracting the bundle of rods (a) from said assembly and for bringing the bundle into the waiting position and means (30, 40) for permitting the automatic putting into place of the combs (20, 22) in proportion to the displacement of the bundle towards said position.

13. Installation according to any one of the claims 8 to 12, characterized in that the bottom of at least some of the recesses of the cassette is partly formed on mobile members (155) making it possible to vary the height of these recesses.

14. Installation according to claim 13, characterized in that means (159) are provided for controlling a vertical displacement of the mobile members.

13

FIG. 1

FIG. 2

FIG. 3

EP 0 244 278 B1

# FIG. 4

FIG. 5

FIG.6

FIG.7

# FIG. 8

FIG 9

FIG. 10

66

70  72  76  82  44  F7  84  93  64

79  49  42  49  68  42a

FIG. 11

70  66  44  82  F8  64  94

84  68  96

EP 0 244 278 B1

# FIG. 12

# FIG. 13

FIG. 14

FIG. 15

# FIG. 16